(19) Europäisches Patentamt
European Patent Office
Office européen des brevets

(11) **EP 3 046 318 A1**

(12) **EUROPEAN PATENT APPLICATION**

(43) Date of publication:
**20.07.2016 Bulletin 2016/29**

(51) Int Cl.:
***H04N 5/235*** (2006.01)     ***H04N 5/243*** (2006.01)
***H04N 9/73*** (2006.01)

(21) Application number: **15305033.1**

(22) Date of filing: **15.01.2015**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Thomson Licensing
92130 Issy-les-Moulineaux (FR)**

(72) Inventors:
• **Hellier, Pierre
35576 Cesson-Sévigné (FR)**
• **Frigo, Oriel
35576 Cesson-Sévigné (FR)**
• **Sabater, Neus
35576 Cesson-Sévigné (FR)**
• **Delon, Julie
75270 Paris Cedex 06 (FR)**

(74) Representative: **Huchet, Anne
Technicolor
1, rue Jeanne d'Arc
92443 Issy-les-Moulineaux Cedex (FR)**

(54)     **Method and apparatus for motion-based video tonal stabilization**

(57)     One general aspect for motion-based video tonal stabilization uses a keyframe and motion estimation techniques to determine the level of spatial correspondence between input images and the keyframe. When the level of spatial correspondence is high, tonal stabilization is performed through regression and power law tonal transformation to minimize the color differences between images caused by automatic camera parameters without a priori knowledge of the camera model. Tonal error accumulation is reduced by using long-term tonal propagation.

**Figure 2:** Flowchart of proposed motion driven tonal stabilization method

EP 3 046 318 A1

**Description**

TECHNICAL FIELD

The present principles relate generally to methods and apparatus for tonal stabilization of images or of a video sequence.

BACKGROUND

The increasing number of amateur video footages facilitated by the proliferation of low-cost video cameras has significantly increased the number of visible video artifacts, some of them being motion and tonal instabilities. While motion stabilization has been studied by several researchers, tonal instability has been far less discussed.
Video tonal instability is a particular temporal artifact characterized by fluctuations in the colors of adjacent frames of a sequence. According to one prior method, in modern videos these instabilities are mainly caused by automatic settings of the camera, notably automatic white balance and automatic exposure.
Automatic white balance and automatic exposure are common features of consumer digital cameras, which are intended respectively to provide color balanced and well exposed images, while facilitating the user experience. However, these features are mostly appropriated for still images and are not stable in time, resulting in unpleasant tonal instabilities that can be perceived in videos. A notable problem with automatic white balance algorithms is their dependency on illuminant estimation, which is considered an ill-posed problem. Assumptions such as *grey world* and *max rgb* are easily violated in practice and in a context of temporal scene changes, so it is likely to result in chromatic instability.
Automatic exposure, on the other hand, is a crucial feature of the camera to compensate the inherent limitations of dynamic range. However, fast exposure changes in a video footage can be unpleasant to the viewer, so a temporal smoothing of fast varying exposures can potentially enhance the perceived quality of the video. Stabilizing the exposure could also be useful for computer vision applications that rely on brightness constancy assumptions (e.g., tracking, optical flow).
While automatic white balance can be simply turned off in some cases, low end cameras offer no control over setup parameters. In this case, the only alternative to avoid unpleasant tonal fluctuations is to further process the video. Few works in the literature have approached the problem of tonal instability in videos, and the existing solutions are limited to deal with specific types of brightness flicker or are not suited for a real time application.
The embodiments described herein provide a fast and parametric method and apparatus to solve tonal stabilization in videos. One feature is the modelling of the tonal stabilization problem as an optimization that can be easily computed with a closed form solution. Moreover, it takes dominant motion between frames into account, allowing this method to compute accurate color correspondences between temporally distant frames. The proposed apparatus and method lead to a more robust and reliable tonal stabilization.

SUMMARY

These and other drawbacks and disadvantages of the prior art are addressed by various described embodiments, which are directed to methods and apparatus for contrast enhancement of a database of images.
According to one general aspect, a method for video tonal stabilization is provided. The method comprises determining motion based correspondences between an image and a keyframe to generate a spatial correspondence function. This can comprise performing motion estimation between an input image and a keyframe, warping the image to align with the keyframe, and discarding values higher than a threshold on a difference map of the aligned images. The method further comprises updating the keyframe if a number of motion based correspondences between the images is greater than a threshold before repeating the determining step using the updated keyframe, and performing color correction on the image if a number of motion based correspondences is less than a threshold. The color correction can comprise performing a regression over a set of points in the spatial correspondence function; and performing a transformation on the image to minimize color differences between the image and the keyframe.
According to another general aspect, there is provided an apparatus for video tonal stabilization. The apparatus comprises a motion estimator operating on an image and a keyframe. The apparatus further comprises an image processor that aligns the image and keyframe, a comparator operating on a difference map of the aligned images to discard values higher than a threshold resulting in a spatial correspondence function, and circuitry that updates the keyframe if the number of motion based correspondences between images is less than a threshold, and causes control to repeat operation of the motion estimator, image processor and comparator. The apparatus further comprises a first processor performing a regression over a set of points in the spatial correspondence function if a number of motion based correspondences between images is greater than a threshold; and a second processor performing a transformation on the image to minimize color differences between said image and said keyframe.

The details of one or more implementations are set forth in the accompanying drawings and the description below. Even if described in one particular manner, it should be clear that implementations can be configured or embodied in various manners. For example, an implementation can be performed as a method, or embodied as an apparatus, such as, for example, an apparatus configured to perform a set of operations or an apparatus storing instructions for performing a set of operations, or embodied in a signal. Other aspects and features will become apparent from the following detailed description considered in conjunction with the accompanying drawings and the claims.

The invention concerns also a computer program product downloadable from a communication network and/or recorded on a medium readable by computer and/or executable by a processor, comprising program code instructions for implementing a method according to at least one of claims 1 to 5.

The invention concerns also a non-transitory computer-readable medium comprising a computer program product recorded thereon and capable of being run by a processor, including program code instructions for implementing a method according to at least one of claims 1 to 5.

BRIEF DESCRIPTION OF THE DRAWINGS

The present principles can be better understood in accordance with the following exemplary figures, in which:

Figure 1 shows original images and corrected examples through video tonal stability.
Figure 2 shows one embodiment of a flowchart for video tonal stabilization.
Figure 3 shows some steps for video tonal stabilization.
Figure 4 shows channel-wise histogram specification mapping according to the principles.
Figure 5 shows examples of images with different exposure and white balance.
Figure 6 shows an example of images corrected with a power law model.
Figure 7 shows one embodiment of a method for video tonal stabilization.
Figure 8 shows data points extracted from color chart and estimate power law transformations.
Figure 9 shows an example of exposure correction for a time lapse sequence.
Figure 10 shows data points and estimated curves to correct the sequence of Figure 9.
Figure 11 shows an embodiment of an apparatus for video tonal stabilization.
Figure 12 shows an example of tonal stabilization in a test sequence.
Figure 13 shows an embodiment of a flowchart for video tonal stabilization.

DETAILED DESCRIPTION

The described embodiments are directed to methods and apparatus for motion-based video tonal stabilization.

Generally speaking, tonal stabilization can be described as searching for the transformations that minimize undesired color variations in multiple images of a sequence.

This section presents the rationale and the main contributions of the proposed method for video tonal stabilization. First of all, the aim is to conceive a method that has the following desired properties: 1) Accuracy in modeling the color instabilities observed between frames in a video; 2) Robustness against motion, occlusion and noise; 3) Computational simplicity to be implemented in a near real time application.

Observe in practice that the first property (model accuracy) is often in contradiction with the other properties of robustness and computational simplicity. Notably, in terms of tonal transformation, the radiometric calibration approach, which can be considered the most accurate model, is actually not robust against motion and occlusion, and is overly complex. Having this in mind, the proposed method has a goal of a good tradeoff between these three properties.

In addition, note that the state-of-the-art tonal stabilization method from a prior method does not meet the desired properties for tonal stabilization that were mentioned above. The main limitation of this method is to rely on spatial correspondences, however without applying motion compensation between the spatial coordinates of adjacent frames. Hence, the accuracy of spatial correspondences can be seriously compromised in the case of fast motion between two frames.

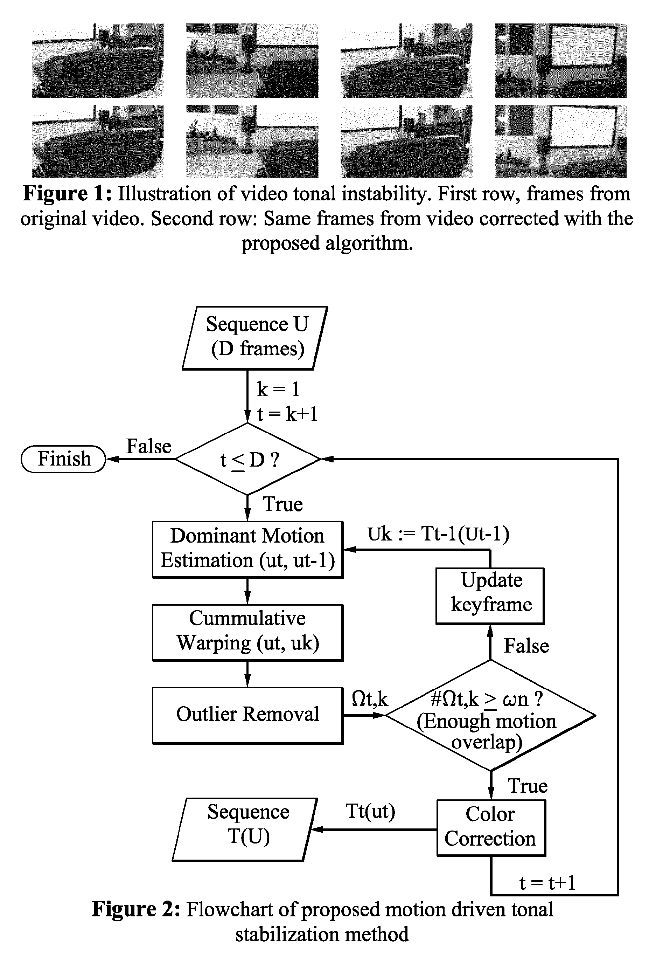

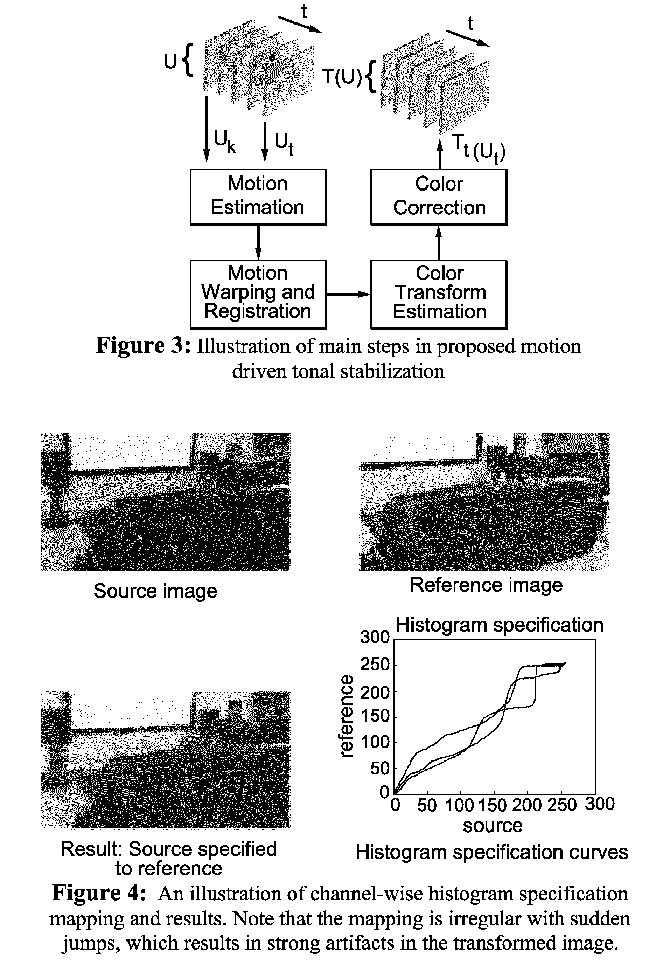

Figure 2 shows a flow diagram of the proposed method for tonal stabilization and Figure 3 presents a general overview of the proposed method. In order to achieve robustness against motion and occlusion (an important limitation of earlier methods), the dominant motion between a reference keyframe $u_k$ and the frame to be corrected $u_t$ is estimated. Then, these two frames are registered in order to compute color correspondences. Note that by cumulative motion, we are able to register $u_t$ and $u_k$, even if they differ by several frames in time. Finally, the color correspondences are used to estimate a color transformation that is applied to correct the tonal instabilities.

The contributions of the proposed method in comparison to state-of-the-art can be summarized as the following:

1. Motion driven method: use of accurate color correspondences between frames obtained by dominant motion estimation and compensation.

2. Temporally longer tonal coherence, by using long term motion estimation obtained by motion accumulation.

3. Proposal of a computationally simple yet efficient parametric model for color correction.

For the application of the proposed algorithm, some assumptions need to be made regarding the sequence to be corrected and the color fluctuations to be modelled. In particular, assume that:

1. There are spatial correspondences (or redundancy in content) between neighbor frames in the sequence (no scene cuts);

2. There is a global transformation which can compensate the colorimetric aberrations between the frames.

The first assumption is confirmed for every sequence composed of a single shot, as long as it does not pass through extreme variations of scene geometry (i.e., nearly total occlusion) or radiometry (i.e., huge changes in illumination or saturation). The second assumption implies that the observed color instability and consequently the camera response function are global (spatially invariant). In other words, the proposed method is not suitable for correction of local tonal instabilities such as local flicker observed in old archived films.

The following subsections discuss in detail each main step (in Figure 3) of the proposed method. For the sake of simplicity, the tonal transformation model is described next, first assuming the simplest case of color correction between images without motion. In the sequence, the proposed model is presented to deal with the general case of tonal stabilization of sequences containing motion. Finally, the effectiveness of the method is described from experiments with real sequences and comparisons with the state-of-the-art.

Tonal transformation model

In this section, the tonal transformation model for correction of tonal instability is described. In particular, consider the case of tonal instability observed in images taken with the same camera, so that tonal variations are caused specifically by the camera automatic parameters.

According to one prior method, the complete color acquisition model is given by

$$\begin{bmatrix} u_R \\ u_G \\ u_B \end{bmatrix} = F\left(T_s T_w \begin{bmatrix} E_R \\ E_G \\ E_B \end{bmatrix}\right), \tag{1}$$

where $F: \mathbb{R}^3 \rightarrow \mathbb{R}^3$ denote the color camera response, $T_s$ is a 3 x 3 matrix accounting for camera color space transform (constant over time), $u$ is the observed intensity, $E$ is the irradiance; $T_w$ is a diagonal matrix accounting for changes in white balance and exposure (varying over time) and given by

$$T_w = \begin{bmatrix} \phi & 0 & 0 \\ 0 & \xi & 0 \\ 0 & 0 & \psi \end{bmatrix}. \tag{2}$$

Let $u_0$ and $u_1$ be two perfectly registered images taken by the same camera, differing only with respect to white balance and exposure (so that these images have identical irradiance $E$). Denoting $H = F(T_s)$ as the component of the camera response that is constant, then

$$u_0 = [u_{0_R}, u_{0_G}, u_{0_B}]^T = H([\phi_0 E_R, \xi_0 E_G, \psi_0 E_B]^T) \tag{3}$$

and

$$u_1 = [u_{1_R}, u_{1_G}, u_{1_B}]^T = H([\phi_1 E_R, \xi_1 E_G, \psi_1 E_B]^T). \tag{4}$$

Now, a simple approach to correct the tonal difference between $u_0$ and $u_1$ is to transform the colors of $u_0$ to have the same tonal characteristics of $u_1$, so that

$$H^{-1}(u_0) = \begin{bmatrix} \dfrac{\phi_0}{\phi_1} & 0 & 0 \\ 0 & \dfrac{\xi_0}{\xi_1} & 0 \\ 0 & 0 & \dfrac{\psi_0}{\psi_1} \end{bmatrix} H^{-1}(u_1) \tag{5}$$

$$u_0 = H\left( \begin{bmatrix} \dfrac{\phi_0}{\phi_1} & 0 & 0 \\ 0 & \dfrac{\xi_0}{\xi_1} & 0 \\ 0 & 0 & \dfrac{\psi_0}{\psi_1} \end{bmatrix} H^{-1}(u_1) \right). \tag{6}$$

Hence, in theory tonal stabilization between images $u_0$ and $u_1$ can be achieved with a simple diagonal transformation performed in the camera sensor space (given by non-linear transformations $H$ and $H^{-1}$). This tonal stabilization model is inspired by radiometric calibration as an accurate procedure to perform camera color transfer when irradiances $E = [E_R, E_G, E_B]$ are known in the form of RAW images, allowing an estimate of $H$. However, for the problem of tonal stabilization, we are faced with videos taken with low-cost cameras, from which we cannot make the usual assumptions that are necessary to compute radiometric calibration. The assumption of multiple exposures from the same scene, which is required to estimate the camera response function may not be valid for some sequences, and RAW-sRGB correspondences are also not available in practice.

According to the desired properties just listed for video tonal stabilization, the radiometric calibration model, while accurate, is overly complex and not general enough to be applied for tonal stabilization of sequences from which the irradiances are not known. The question now is how to approximate this model, when the only information known are the intensities observed in $u_0$ and $u_1$ ?

While the observed images do not provide enough information to derive the exact color transformation that normalize their tonal characteristics, it is proposed herein that an effective solution for this problem comes from a tonal intensity mapping (such as a brightness or color transfer function), which can be computed by parametric or non-parametric estimation methods. Next, the pros and cons of each estimation approach are described and provide the motivation for the proposed choice.

Non-parametric or parametric color transformation

Non-parametric color transformation models do not make explicit assumptions on the type of transformation, allowing to model non-linear transformations, but at the risk of lack of regularity that would demand post-processing regularization.

Some notable examples of non-parametric color transformations are weighted interpolation and histogram specification. As previously discussed, a weighted interpolation (such as suggested in a prior art tonal stabilization method) has the drawback of being computationally complex both in terms of memory requirements and processing time. It is noted that a color interpolation such as proposed by another prior method is in fact a global transformation that is similar to a histogram specification, the main difference being that the interpolation is computed from spatial correspondences, while the histogram specification is computed from intensity cumulative histograms.

Classical histogram specification can be an efficient alternative to solve the problem of tonal stabilization (channel-wise specification requires only $0(n log\ n)$ computations, where $n$ is the number of pixels in an image). However, there are well known limitations of histogram specification. Indeed, it can lead to contrast stretching and quantization artifacts that would need post-processing, and range extrapolation of the transformation is not always possible, especially when dealing with color. Take for example the transformations illustrated in Figure 4, which shows a channel-wise histogram specification. Note that the red and blue transformation curves in Figure 4 are affected by sudden jumps, which turn out to produce strong artifacts in the resulting image after transformation.

On the other hand, parametric models assume that the transformation can be modelled by a given function (linear, affine, and polynomial, for example), so the problem is solved by estimating the coefficients of the transformation.

While not very flexible to model any form of transformation, parametric models have the important advantage of being expressed by smooth and regular functions, well defined for the whole color range, so that extrapolation is not a problem. Furthermore, since the transformation is described by few parameters, it reduces the risk of oscillation in time.

Most white balance algorithms implemented in digital cameras adjust the channel scaling with a simple parametric model, which is a Von Kries diagonal transformation (In practice, some camera white balance algorithms compensate only the red and blue channels, leaving the green channel untouched) performed in RAW images. However, as described in the discussion of tonal transformation model, a diagonal model applied to sRGB images is not able to model non-linearities inherent to the camera response.

There is not enough information to derive the exact tonal transformation model for color stabilization, whether it is a parametric or non-parametric transformation. Hence, there is a need for a tonal transformation model that is simple enough to be quickly computed, and accurate enough to produce a visually pleasant tonal stabilized sequence. After performing experiments with different parametric and non-parametric models (histogram specification, splines interpolation, piece-wise linear function, diagonal model) the power law transformation has shown to best fit the criteria mentioned above.

Power law color transformation

For the sake of simplicity, this subsection describes the proposed tonal transformation model assuming used to correct tonal instability in sequences containing no motion. The general case of sequences containing motion is approached later.

The assumption to correct non-linear tonal instabilities is that exposure differences between frames can be approximated by an exponential factor, while white balance correction can be approximated by diagonal color re-scaling. A parametric power law model is successful in jointly meeting these assumptions. Formally, let $u_k$ be a reference image and $u_t$ an image to be corrected, assuming the images are perfectly registered, a power law relationship between $u_t$ and is written as a function of the form

$$u_k(\boldsymbol{x},c) = T(u_t) = \alpha_c u_t(\boldsymbol{x},c)^{\gamma_c}, \tag{7}$$

where $c = \{r,g,b\}$ denotes the image color channels, $x \in \Omega$ denotes the spatial coordinates over the domain $\Omega \subseteq \mathbb{R}^2$ The problem now is to estimate the optimal coefficients $\alpha_c$, $\gamma_c$ such that we minimize the mean square error

$$\arg\min_{\alpha_c,\gamma_c} \sum_{x\in\Omega} \left(u_k(\boldsymbol{x},c) - \alpha_c u_t(\boldsymbol{x},c)^{\gamma_c}\right)^2. \tag{8}$$

The minimization of non-linear Eq. 8 over $\alpha_c$ and $\gamma_c$ has not an analytical solution, b but the power law in Eq. 7 can be rewritten

$$\log u_k(\boldsymbol{x},c) = \gamma_c \log u_t(\boldsymbol{x},c) + \log \alpha_c \tag{9}$$

and can be solved by linear least squares fitting as an affine function defined in the logarithmic domain:

$$\underbrace{\arg\min_{\widetilde{\alpha_c},\gamma_c} \sum_{x\in\Omega} \left(\log u_k(\boldsymbol{x},c) - (\gamma_c \log u_t(\boldsymbol{x},c) + \widetilde{\alpha_c})\right)^2}_{E(49)}. \tag{10}$$

where $\widetilde{\alpha_c} = \log \alpha_c$ Now, solve Eq. 10 by setting

$$\frac{\partial E}{\partial \widetilde{\alpha_c}} = \frac{\partial E}{\partial \gamma_c} = 0 \tag{11}$$

to derive the well-known analytical solution to univariate linear regression:

$$\gamma_c = \frac{\sum_{x \in \Omega}(u_k(x,c) - \bar{u}_k(x,c))(u_t(x,c) - \bar{u}_t(x,c))}{\sum_{x \in \Omega}(u_t(x,c) - \bar{u}_t(x,c))^2} = \frac{Cov(u_t, u_k t)}{Var(u_t)} \quad (12)$$

$$\widehat{a_c} = \bar{u}_{k(c)} - \gamma_c \bar{u}_{t(c)} \quad\quad\quad (13)$$

$$\alpha_c = \exp\left(\widehat{a_c}\right). \quad\quad\quad (14)$$

This solution to obtain the coefficients $\alpha_c$ and $\gamma_c$ has some desirable properties: it is computationally simple and exact, guaranteed to converge in $O(n)$ iterations (linear in the number of $n$ correspondent points, $n = \# \Omega$. As a remark, note that minimizing Eq. 8 is evidently not equivalent to minimize Equation 10. It is known that when fitting an affine function in the logarithmic domain, the loss function $E$ also becomes logarithmic, meaning that residuals computed from low values will tend to have more weight than residuals computed from high values. For our application of color correction, this implies that the estimation can be specially sensitive to the presence of outliers in dark colors. Even though the analytical solution is fast and exact (for non-liner error), for higher regression accuracy in terms of linear mean squared error, the solution can be alternatively computed with a numerical method such as gradient descent.

The accuracy of the power law model using the $R^2$ (coefficient of determination) can be evaluated, which gives some information about the accuracy of fit of the model. This coefficient is a statistical measure of how well the regression line approximates the real data points. For instance, a $R^2$ of 1 indicates that the regression line perfectly fits the data. In this case, it is preferable to evaluate how good a regression line is fitted in the logarithmic domain, so the accuracy of fit is given by

$$R^2 = 1 - \frac{\sum_{x \in \Omega}(\log u_k - T_l(\log u_t))^2}{\sum_{x \in \Omega}(\log u_k - \overline{\log u_k})^2}, \quad\quad\quad (15)$$

where $T_l(\log u_t) = \gamma_c \log u_t(x,c) + \widehat{a_c}$.

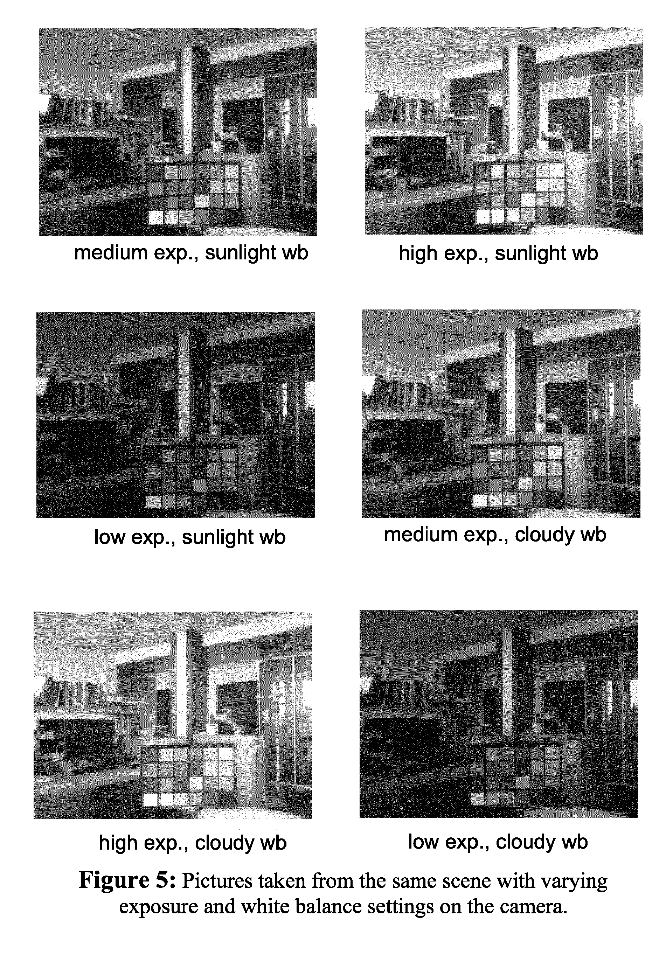

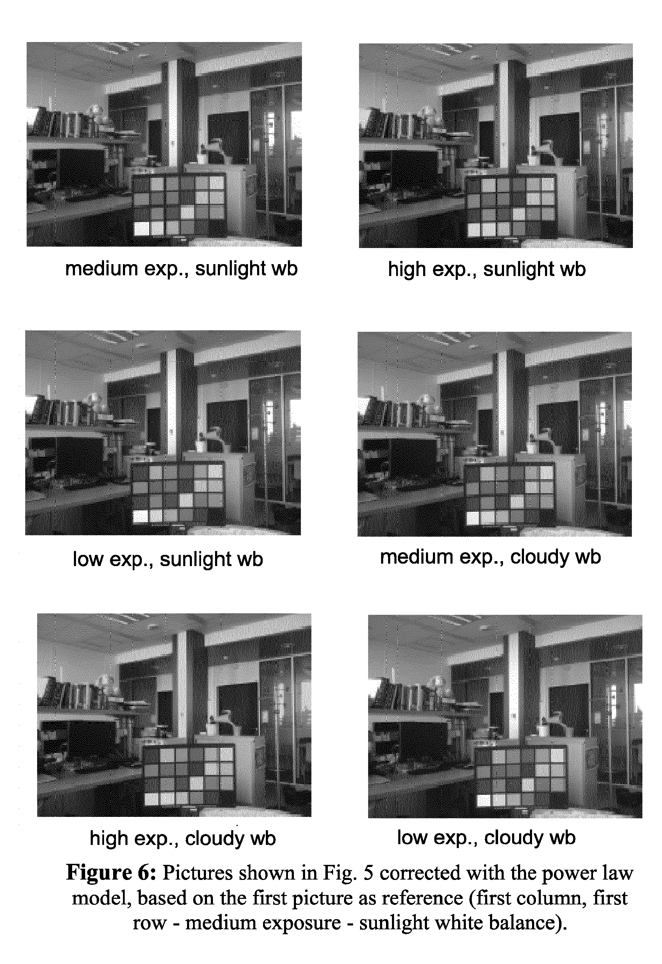

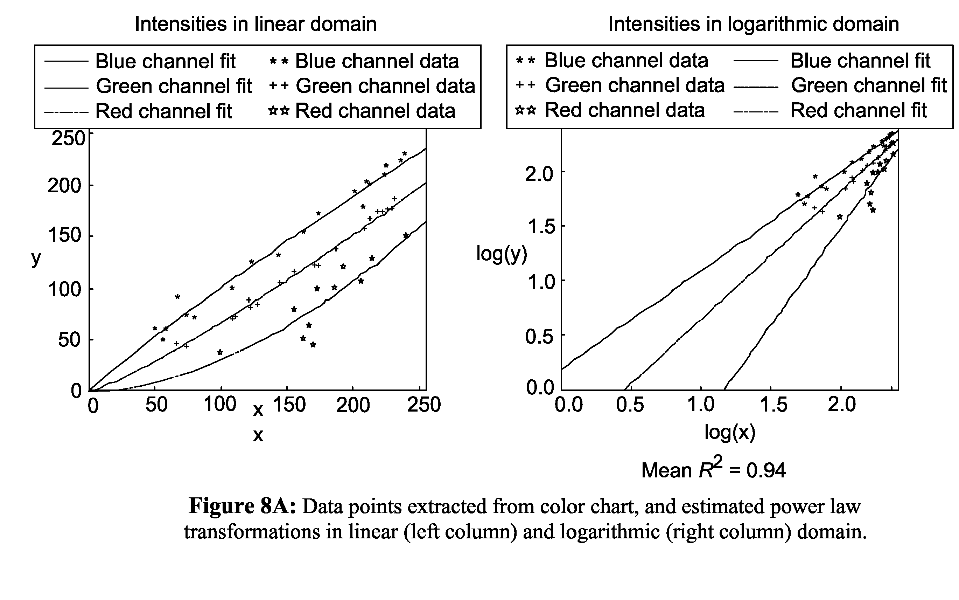

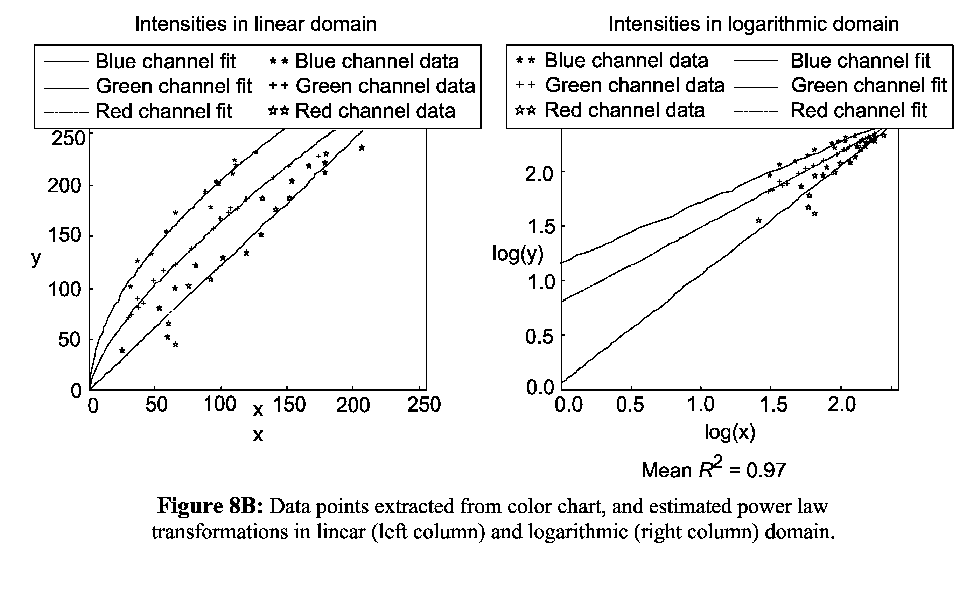

The power law relationship can be illustrated with images taken from the same scene where there are variations in camera exposure and white balance. Figure 5 shows a sequence of photographs of a same scene, taken by a smartphone. Each picture is adjusted (using the camera settings) to have a different exposure or white balance, so tonal changes can be analyzed by studying the color transfer function between the first picture and the following ones. More specifically, to take advantage of the Macbeth color chart as a reference, use the median color value of each color in the chart to estimate a power law transformation. Figure 8 plots the graphics of the functional relationship between the colors from the first picture and the colors in the following pictures. Note that the left column of Figure 8 plots the ordinary linear graphics, where a non-linear relationship is observed. In the right column is plotted the log-log graphic, where the functional relationship is now approximately linear. Finally, Figure 6 shows the pictures of the same sequence after being corrected with the estimated power law color transformations. Note that the colors are effectively stabilized after the color correction. However, in a careful observation, it can still noted there are some color differences between the first picture and the following ones. This is due to the fact that the model is approximate, and will likely to fail in saturated colors that cannot be mapped without the aid of additional camera information. In addition, note that in this experiment the variations in white balance and exposure are extreme, it is unlikely to observe such extreme variations in white balance in a video shot. In addition, the appropriateness of fit $R^2$ over the log domain is larger than 0.9 for all the computed regressions shown in this example, which shows that the relationship between color intensities is in fact approximatively linear in a logarithmic scale.

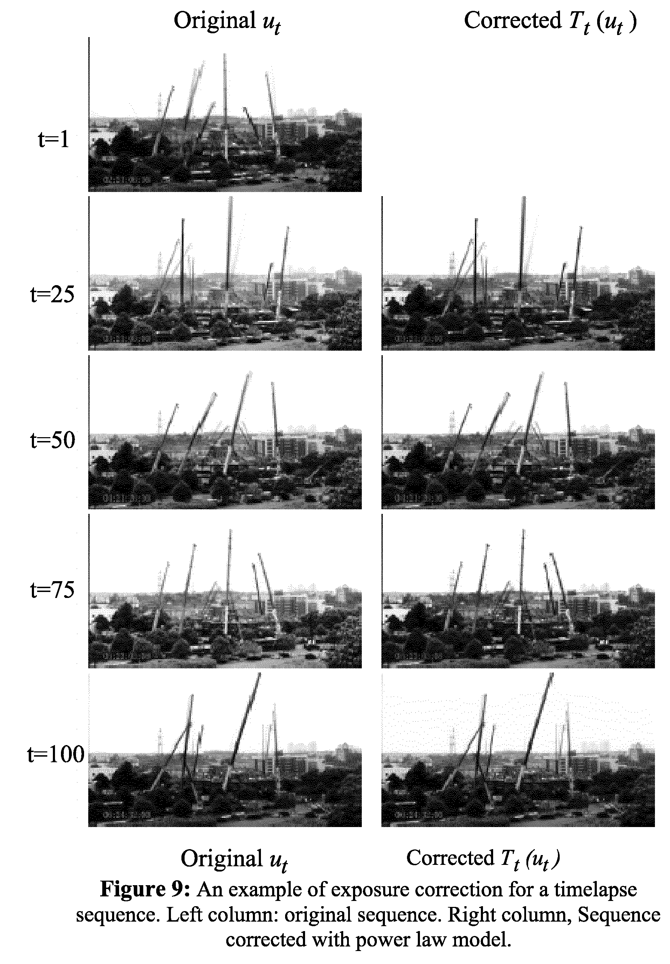

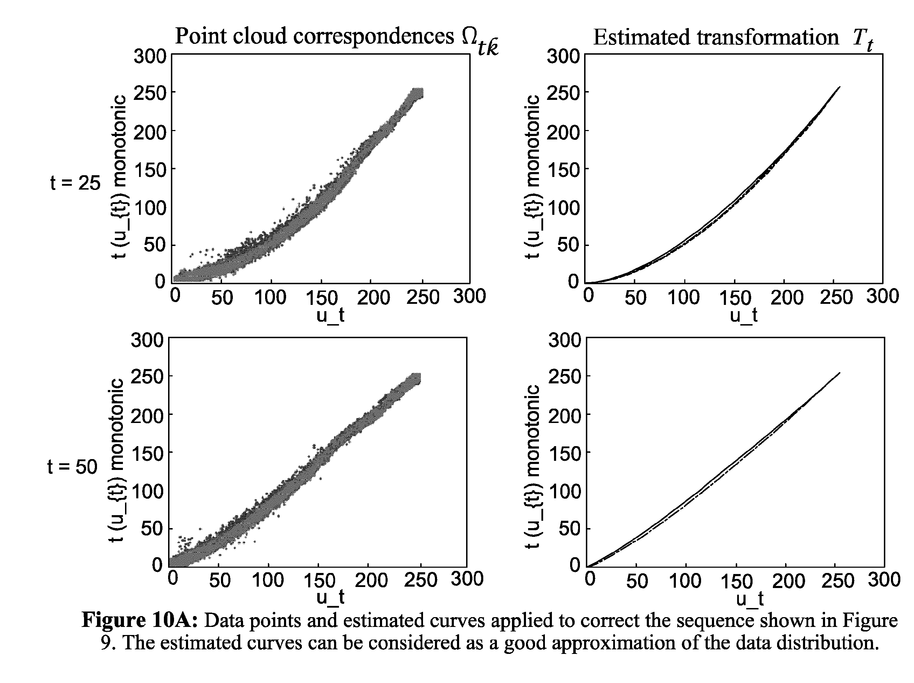

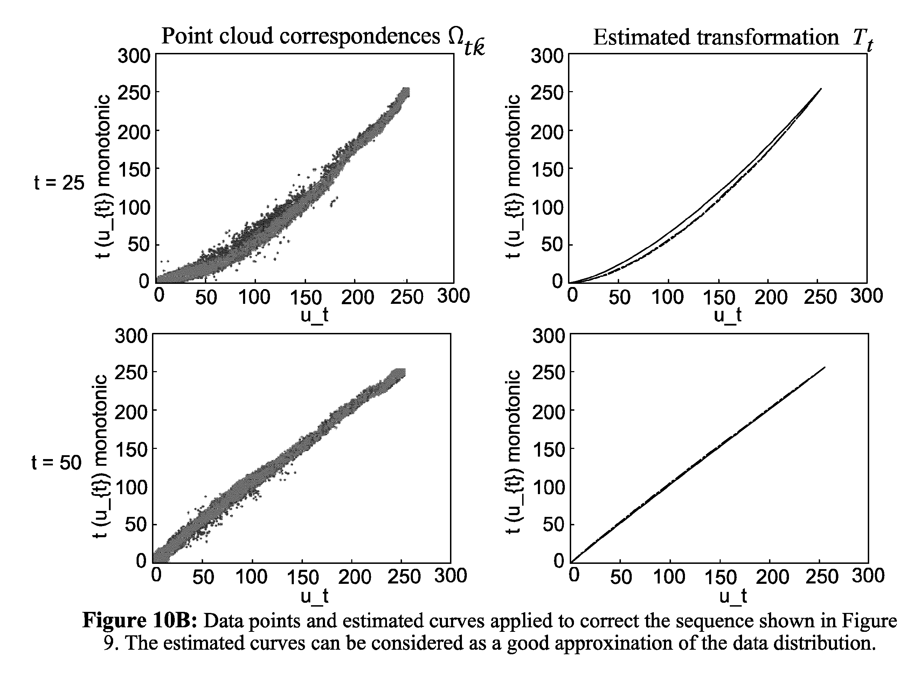

The proposed tonal transformation model can also be effectively applied to compensate only exposure instability. Figure 9 shows five frames from the original and corrected version of a time lapse sequence. Sequences containing no motion, such as a time lapse video, are interesting to validate the tonal correction model, since the influence of motion outliers do not interfere in the accuracy of estimated tonal transformation. In Figure 10 we show the plot of the RGB points and the RGB estimated curves to transform each frame according to the correspondences with the first frame. Note that the power law transformation fits well to the intensity distribution.

Finally, we note that a power law model for color transformation is commonly used for color grading in film post-production. The ASC CDL (American Society of Cinematographers Color Decision List) is a format for exchange of color grading parameters between equipment and software from different manufacturers. The format is defined by three parameters slope ($\alpha$), offset ($\beta$) and power (y), which are independently applied for each color channel:

$$T(u) = (\alpha u + \beta)^\gamma . \qquad (16)$$

This transformation is usually applied in a color space specific to the color grading software (for example YRGB color space in DaVinci Resolve). Compared to ASC CDL, our parametric model is similarly based on power and slope coefficients, without offset, which advantageously allows us to compute the optimal parameters with an analytical expression.

Motion and temporal coherence model

Although the assumption of perfectly registered images is a convenient starting point, it is evident that in practice, movement is observed in the majority of sequences. Motion estimation is proposed by the present methods to guarantee tonal stabilization by taking into account the movement not only between a pair of frames, but also between several frames in a sequence.

There are numerous motion estimation methods, some examples being dominant global motion estimation, dense optical flow, and sparse feature tracking. For the present task of estimating tonal transformations driven by motion based correspondences, assume that it is desirable to have a dense set of correspondences, so that we take advantage of correspondences between homogeneous intensity areas to estimate accurate color transformations.

In particular, the present techniques rely on dominant motion estimation between frames, mostly motivated by a tradeoff. Dominant motion is computationally simpler (potentially computed in real time) in comparison to dense optical flow, however, dominant motion does not provide pixel-wise accuracy. But dominant motion usually accounts for camera motion, and tonal instabilities seen in videos are normally correlated with the movement of the camera. In contrast to tasks that depend heavily on accurate motion (i.e. video motion stabilization), there is no need for a highly accurate motion description in order to estimate a color transformation that compensates tonal differences between frames.

Denoting $u_t : \Omega \to \mathbb{R}^3$ and $u_k : \Omega \to \mathbb{R}^3$ as two neighboring frames in a sequence such that $t = k + 1$, we can assume that $u_t$ and $u_k$ depict the same scene, differing only by a small spatial displacement. Then, the 2D motion between these frames can be described by a global transformation $A$, such that $u_t(\hat{\Omega})$ and $u_t(A(\Omega))$ denotes the registration (motion compensated alignment) of $u_k$ and $u_t$, where $\tilde{\Omega}_k \subseteq \Omega_k$ is a subset of spatial coordinates in $u_k$. More specifically, we represent $A$ as a matrix that accounts for affine warping, which can be considered a good tradeoff between complexity and representativeness, taking into account scale, translation and rotation transformations between frames. Then,

$$A(\boldsymbol{x}) = \begin{bmatrix} u(\boldsymbol{x}) \\ v(\boldsymbol{x}) \end{bmatrix} \qquad (17)$$

$$\begin{aligned} u(\boldsymbol{x}) &= a_1 + a_2 x_1 + a_3 x_2 \\ v(\boldsymbol{x}) &= a_4 + a_5 x_1 + a_6 x_2, \end{aligned} \qquad (18)$$

where $x = (x_1, x_2)$ denotes the original pixel coordinates, $A(x)$ is the affine flow vector modeled at point $x$ and $(\alpha_1 ..,6)$ are the estimated motion coefficients. We estimate the coefficients based on a robust parametric motion estimation methods in a prior art approach. That method computes the optimal affine motion coefficients in terms of spatiotemporal gradients by Iteratively Reweighted Least Squares (IRLS) with M-estimator loss function (Tukey's biweight). Such loss function is known to be more robust against motion outliers than usual quadratic error. That method also takes into account a brightness offset as a simple way of relaxing the brightness constancy assumption (which states that pixel intensities from the same object do not change over time) to deal with minor changes in scene illumination.

After considering the case of motion estimation between neighbor frames $u_t$ and $u_k$, for $t = k + 1$, we generalize the approach for the case of an arbitrary $k$ differing to $t$ by several frames. In particular, for video tonal stabilization, it is desirable to take advantage of motion estimation between several frames in order to guarantee longer tonal coherence. However, long term motion estimation is a challenging problem and methods based on spatiotemporal gradients cannot deal with direct large motion estimation between frames. An usual workaround to deal with larger displacement is to estimate motion from multiple image resolutions, but even though, the multiresolution estimation is inaccurate in estimating large motion between several frames. In other words, reliable parametric dominant motion estimation based on this prior approach is limited only for interframe motion.

In practice, a simple accumulation of interframe motions is used as an approximation of long term motion, which can be used for the estimation of tonal transformations. Formally, assuming $t \gg k$ (the keyframe is in the "past") and $s = (t\text{-}k)$ -1 being the temporal scale for which the scenes in $u_t$ and $u_k$ are overlapped, the accumulated affine motion from $u_t$ to $u_k$ is given by

$$A_{t,k} = A_{t,t-1} \circ A_{t-1,t-2} \circ \ldots \circ A_{t-s,k'} \qquad (19)$$

where $A_{t,k}$ denotes the motion coefficients estimated from frame $u_t$ to $u_k$. Having an estimate of $A_{t,k}$, we can warp $u_t$ to $u_k$ in order to get a registered pair of images with known motion compensated correspondent points, which are defined by

$$\Omega_{t,k} = \{(\boldsymbol{x}, \boldsymbol{y}) | \boldsymbol{x} \in A_{t,k}(\Omega_t), \boldsymbol{y} \in \hat{\Omega}_k\}, \qquad (20)$$

where $\hat{\Omega}_k \subseteq \Omega_k$. Nevertheless, it should be noted that the motion estimation is a rough global approximation and is likely to contain errors due to occlusions, non-dominant (object) motion, or simply inaccurate coefficients in $A_{t,k}$. Hence, motion outliers can be discarded to guarantee an accurate color transformation. One approach is to compute a difference map between the aligned images, and consider that values higher than a threshold on this difference map will correspond to the outliers. However, the difference map being based on the residual of intensity values, it should be noted that intensity differences are not reliable under brightness and color changes between frames.

Thus, first compute a rough radiometric compensation of tonal differences between the aligned images as a measure to reduce the risk of confusing motion outliers with tonal differences. In the sequence, compute a difference map from the corrected warped frame, which will discard the motion outliers and keep the colorimetric differences - which are essential to estimate the color transformation.

Formally, the outlier removal approach can be summarized as the following. Let $\hat{\Omega}_{t,k}$ be the set of correspondent spatial coordinates (motion overlap) shared between two frames $u_t$ and $u_k$. $\hat{\Omega}_{t,k}$ is computed by accumulating frame to frame motions - warp $u_t$ to align it to the keyframe $u_k$ in order to have $u_k(\hat{\Omega}_k)$ registered to $u_t(A_{t,k}(\Omega_t))$. Since $\hat{\Omega}_{t,k}$ contains motion outliers, reject outlier data, but first account for possible tonal differences between the aligned frames, so that these differences are not taken as outliers. Given the tonal differences between the aligned current frame and key frame are compensated by a simple mean value shift:

$$\tilde{u}_t(\boldsymbol{x}, c) = (u_t(\boldsymbol{x}, c) - \mu(u_t(c)) + \mu(u_k(c)) \qquad (21)$$

Finally, a set of corresponding spatial coordinates filtered by motion outliers is defined by

$$\Omega_{t,k} = \{(\boldsymbol{x}, \boldsymbol{y}) \in \hat{\Omega}_{t,k} | \frac{1}{3} \sum_{c \in C} [u_k(\boldsymbol{y}, c) - \tilde{u}_t(\boldsymbol{x}, c)]^2 < \sigma\}, \qquad (22)$$

where $\sigma$ is the empirical noise, which can be an estimation (with a noise estimation method from a prior art method) or an approximation of the noise variance in $u_t$ and $u_k$.

Based on the set of spatial correspondences between temporally distant frames $\Omega_{t,k}$, the present principles can estimate temporally coherent tonal transformations, so that tonal instabilities are compensated. By taking long term motion into account, it enforces that tonal coherency is not lost from frame to frame.

Motion driven tonal stabilization

In describing motion driven tonal stabilization, first consider an ideal symmetric operator. This transformation has the desired property of being invariant with respect to the time direction, avoiding bias to the colors of the keyframe. This definition leads to a symmetric scale-time correction similar to the operator proposed in at least one other method:

$$S_t(u_t) = \sum_{i=-s}^{s} \lambda_i T_i(u_t),$$

(23)

where $s$ is the temporal scale of the correction, $T_i$ is a tonal transformation weighted by $\lambda_i$, assuming that $\lambda_i$ is a Gaussian weighting intended to give more importance to transformations estimated from frames that are temporally close to $u_t$. This operator can be seen as a temporal smoothing which computes the tonal stabilization of $u_t$ as a combination of several weighted transformations. In practice, the $S_t$ operator requires the estimation of $2s$ transformations for every frame to be corrected, which is computationally expensive, and even if $s$ is set to be small, the correction then risks to not be sufficiently effective. This approach fits well for high frequency flickering stabilization, because flicker can be filtered with an operator defined for a limited temporal scale. On the other hand, tonal fluctuations caused by camera parameters could need larger temporal scales to be properly corrected.

A faster and yet efficient alternative to operator $S_t$ is desired where less computations are required to correct each frame. In particular, control of undesired estimation bias and drift is needed through weighted transformations. For the sake of simplicity, assume that the starting point for the sequential tonal stabilization is the first frame of the sequence, then the solution for tonal stabilization can be seen as a temporal prediction, where the correct tonal appearance of $u_t$ is predicted based on previously known tonal states. This is typically the case of an application for sequential on-the-fly correction, for example, to compensate tonal fluctuations of a live camera in a video conference. Even for sequential tonal stabilization, the symmetric property can be approximated by combining forward and backward corrections.

Algorithm 1 shows the proposed sequential motion driven tonal stabilization. For each frame $u_t$, we want to find a triplet of RGB transformations defined as $T_t(u_t)$ which minimizes the tonal differences between $u_t$ and $uk$. Let $M(u_t, u_k)$ denote a function that takes two frames as parameters, computes their motion estimation, warping and outlier rejection, producing as output reliable spatial correspondences. So, the tonal transformation is based on a regression over the set of data points given by the coordinates $\Omega_{t,k} = M(u_t, u_k)$.

The tonal stabilization problem is solved by estimating the optimal coefficients $\alpha_c, \gamma_c$ that transform the colors of $u_t$ to the colors of a keyframe $u_k$ such that we minimize the sum of squared error:

$$argmin_{\alpha_c, \gamma_c} \sum_{(x,y) \in \Omega_{t,k}} (u_k(x,c) - \alpha_c u_t(y,c)^{\gamma_c})^2.$$

Starting from $u_t$, we repeat the main procedures illustrated in Figure 2 (motion estimation, warping, color transform estimation, color correction) for all the following frames, while $\#\Omega_{t,k} \geq \omega n$, where $\omega$ is the motion overlap threshold, usually set to 0.25 and $n$ is the number of pixels in frame $u_t$. When the cardinality $\#\Omega_{t,k}$ of the overlapped region between $u_t$ and $u_k$ is no longer large enough to allow for an accurate color estimation, the keyframe $u_k$ is updated to the previously corrected frame $T_{t-1}(u_{t-1})$.

As a regularization concern, we can ensure that the transformation frame $T_t(u_t)$ does not deviate largely from the original content of $u_t$ by applying a temporal weighting $\lambda$:

$$\hat{u}_t(c) = \alpha_c u_t(c)^{\gamma_c}$$

$$T(u_t) = \lambda(\hat{u}_t(c)) + (1 - \lambda)u_t.$$

The parameter $\lambda$ is set as a weight that decreases exponentially in function of the motion between the current frame and the keyframe (exponential forgetting factor).

In addition, when we apply our method to compensate exposure variations, we can work with 16 bits images, so that intensities larger than 255 do not need to be clipped after color transformation. Then, we have as result a sequence that has an increased dynamic range over time, and the sequence could actually be visualized without losing intensity information in an appropriated high dynamic range display.

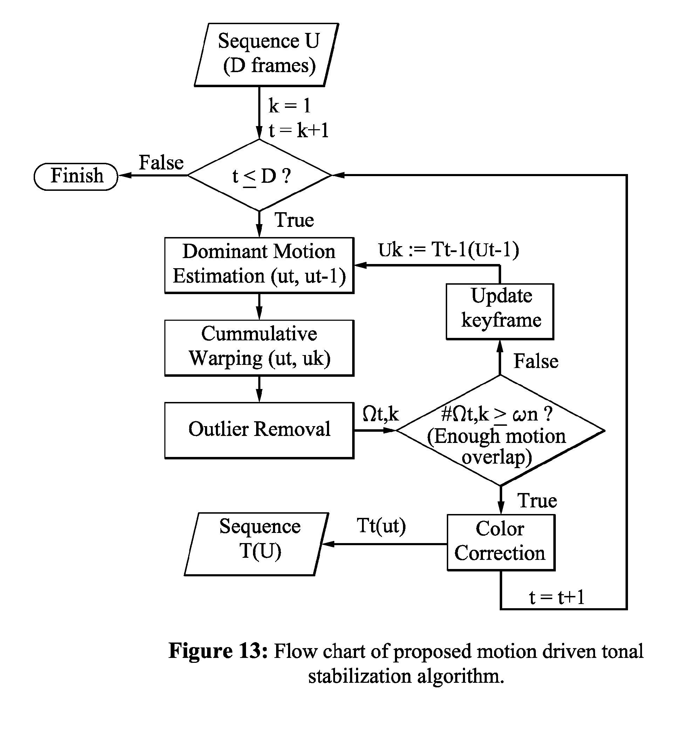

The steps illustrated in Figure 13 (motion estimation, warping, color transform estimation, color correction) are repeated for all the following $u_{t+m}$ frames, until $\#\Omega_{t,k} < \omega \times n$. where $\#\Omega_{t,k}$ denotes the cardinality of the corresponding set. When this condition is met, it means that the cardinality of the overlapped region between $u_t$ and $u_k$ is no longer large enough to allow for an accurate color estimation. In this case, the keyframe $u_k$ is updated to $u_{t-1}$.

**Algorithm 1** Motion driven tonal stabilization,

**Input:** Sequence of frames $u_t \in U, t = \{1,...., D\}$
**Output:** Tonal stabilized sequence $T_t(ut)$, $t = \{1, ..., D\}$

| | | |
|---|---|---|
| 1: | $k \Leftarrow 1$ | # Initialize keyframe index |
| 2 : | $t \Leftarrow k + 1$ | # Initialize current, index |
| 3: | $T_1(u_1) = u_1$ | # First out put frame is not transformer |
| 4: | **while** $t \leq D$ **do** | |
| 5: | $\Omega_{t,k} \Leftarrow M(u_t, u_k)$ | # Compute motion based correspondences, |
| 6: | **if** $\#\Omega_{t,k} \geq \omega \times n$ **then** | # If there are enough correspondences: |
| 7: | **for** $c <= \{R, G, B\}$ **do** | # Perform tonal correction |
| 8: | $\alpha_c, \gamma_c \Leftarrow \arg\min_{\alpha,\gamma} \sum_{(x'y) \in \Omega t, k}(u_k(_{y,c}) - \alpha u_{t(x,c)}{}^{\gamma})^2$ | |
| 9: | $\hat{u}_{t(c)} \Leftarrow \alpha_c u_{t(c)}{}^{\gamma c}$ | |
| 10: | $T_t(u_{t(c)}) \Leftarrow \lambda \hat{u}_{t(c)} + (1 - \lambda)u_{t(c)}$ | |
| 11: | **end for** | |
| 12: | $t \Leftarrow t + 1$ | |
| 13: | **else** | # If there are not enough correspondences: |
| 14: | **if** $k < t - 1$ **then** | |
| 15: | $k \Leftarrow t - 1$ | # Update keyframe |
| 16: | $u_k \Leftarrow T_{t-1}(u_{t-1})$ | |
| 17: | **else** | |
| 18: | $T_t(u_t) \Leftarrow T_{t-1}(u_t)$ | |
| 19: | $t \Leftarrow t + 1$ | |
| 20: | $k \Leftarrow t + 1$ | |
| 21: | **end if** | |
| 21: | **end if** | |
| 23: | **end while** | |

In contrast to a prior method, which propagates transformations from frame to frame, the proposed method guarantees longer tonal coherency between the temporal neighborhood of a keyframe. In other words, this method propagates the tonal transformations from keyframe to keyframe, so that the accumulation of tonal error is controlled by using a larger temporal scale.

An important aspect of the video tonal stabilization problem is that complete temporal preservation of tonal appearance is not always desired, due to the inherent camera dynamic range limitations. In fact, tonal instabilities caused by camera automatic exposure can be perceptually disturbing, but if huge changes occur in camera exposure, the variation of tonal appearance should be kept to some degree, to avoid overexposure. In order to deal with this aspect, temporally weighted color transformations can be performed, or additionally, the dynamic range of the sequence in time can be increased.

Temporal weighting

As a regularization concern, to ensure that the transformation $T_t(u_t)$ does not deviate largely from the original content of $u_t$ a weight $\lambda$ is applied:

$$\widehat{u_t} = \lambda(\alpha(u_t^{\gamma})) + (1 - \lambda)u_t. \tag{24}$$

A similar weighted correction is used in a prior method, where it is proposed to fix $\lambda := 0.85$ as a forgetting factor for recursive de-flickering. It is proposed that the weighting $\lambda$ could vary over time, in function of the temporal distance or in function of the motion between $u_t$, and $u_k$, assuming that frames that are closer in content to the keyframe should receive higher weight in the tonal correction. Since the affine motion parameters $A_{t,k}$ that warput $u_t$ to $u_k$ are known, a rough spatial distance from these two frames can be computed and written as:

$$\lambda = \exp\left(-\lambda_0 \frac{||V_{uk}||}{p}\right), \qquad (25)$$

where $||V_{uk}||$ denotes the norm of the dominant motion vector $V_{uk}$, $p$ is the maximum spatial displacement (number of rows + number of columns in the image), $\lambda_0$ is the exponential decay rate (in practice here, set $\lambda_0 := 0.5$). Another possibility is to weight the correction in function of the temporal distance between $u_t$ and $u_k$:

$$\lambda = \exp\left(-\lambda_0 \frac{|t - k|}{D}\right), \qquad (26)$$

where $D$ is the number of frames in the sequence. In this sense, the idea is to decrease the influence of frames which have large motion displacement from the current frame. A remark of interest, is that work done in the field of color perception has shown that chromatic and contrast sensitivity functions decrease exponentially when the velocity of stimuli increases. Therefore, it is offered here that the motion dependent $\lambda$ has, to some degree, a perceptual motivation.

Increasing temporal dynamic range

In practice, the proposed method guarantees strict tonal stabilization throughout the entire sequence, no matter if strong luminance changes occur. The result is visually pleasant for sequences in which luminance variation is smooth, however, when correcting sequences with significant changes in exposition (for example, from very dark to very bright environments), it has been observed that there is saturation and clipping in the final result. In order to deal with this problem, a higher dynamic range can be used, so that it is not necessary to clip color intensities larger than $2^8 - 1 = 255$ (maximum intensity value for each color channel in 8 bits images).

Larger intensities are possible by working with 16-bit images, so that intensities larger than 255 do not need to be clipped after color transformation. This results in a sequence that has an increased dynamic range over time, and the sequence can be visualized without losing intensity information in an appropriate high dynamic range display.

However, in practice, the sequence needs to be converted back to 8 bits in order to display it in standard low range displays. Instead of clipping all the intensities which extrapolate the limit, alternatively, a tone mapping operator of choice can be applied to render a low dynamic range image. In particular, a logarithmic tone map operator can be used. Given an intensity value i, and the maximum intensity value of the whole sequence z, a log tone mapping operator m is given by

$$m(i) = 255\left(\frac{log(1 + \frac{i}{z})}{log(2)}\right). \qquad (27)$$

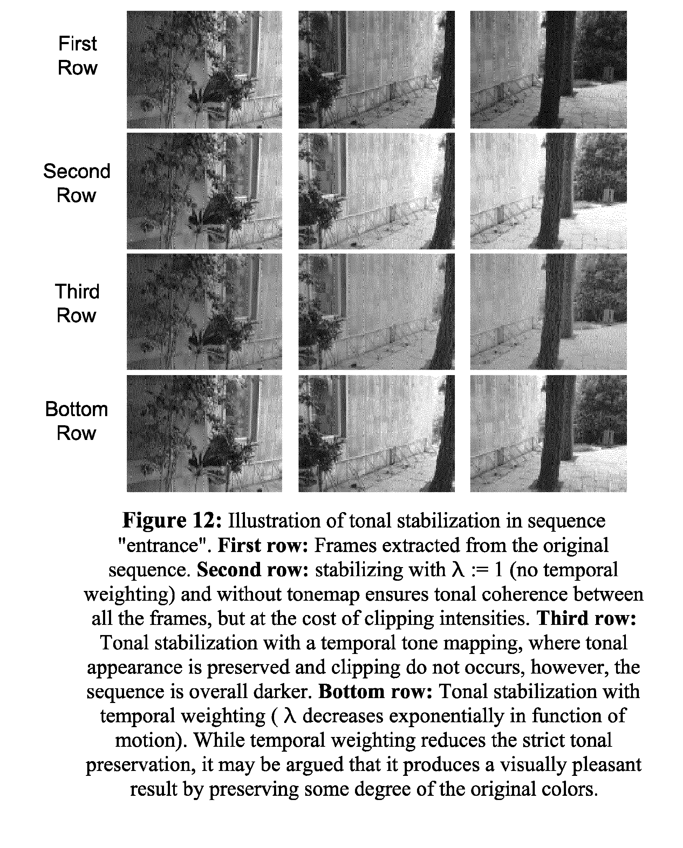

Figure 12 illustrates the potential problem of intensity clipping when applying tonal stabilization and the effects of attenuating it with a temporal tone map operator or with a temporal weighting.

Additional implementation details

In practice, an optional smoothing (bilateral filtering) is applied to $u_t$ and $u_k$ to reduce the influence of noise outliers in the estimation of tonal transformation. Note that this step is not necessary for well exposed sequences where tonal instability is mainly due to white balance fluctuations. Nevertheless, smoothing is recommended when working with sequences strongly affected by noise.

In order to save processing time, rescale (120 pixels wide) the original frames for both motion estimation and color transform estimation, which in turn do not produce noticeable loss in tonal stabilization accuracy. Furthermore, instead of applying the power law color transformation to correct the full original frame composed of N pixels, build one lookup table (LUT) per color channel, and then compute the power law independently for each LUT. This reduces the number of power law computations from $3 \times N$ (more than 16 million for 4k video resolution) to only $3 \times 256 = 768$.

In practice, it has been observed that the optimal value for $\omega$, where $\omega$ can be seen as a geometric similarity threshold between $u_t$ and $u_k$, depends on the accuracy of the motion estimation. If the motion is not accurate, a greater value for $\omega$ can be preferable, so that the motion estimation error is less accumulated with time. In general, it has been observed that $\omega := 0.25$ leads to stable color transformations in most cases.

The general aspects described herein have proposed an efficient tonal stabilization method, aided by composed motion estimation and power law tonal transformation. A simple six-parameters color transformation model is enough to provide tonal stabilization caused by automatic camera parameters, without the need to rely on any a priori knowledge about the camera model.

In contrast to the state of the art, the proposed algorithm is robust for sequences containing motion, it reduces tonal error accumulation by means of long-term tonal propagation, and it does not require high space and time computational complexity to be executed.

In addition, one of the main advantages of the proposed method is that it could be applied in practice online, giving it potential for real time video processing applications such as tonal compensation for video conferences or for live broadcast.

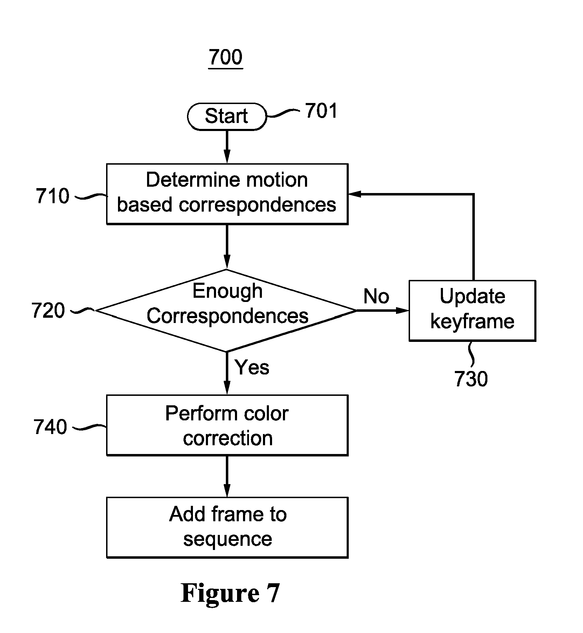

One embodiment of a method 700 for tonal stabilization of images is shown in Figure 7. The method commences from start block 701 and proceeds to block 710 for determining motion based correspondences. This block can be comprised of performing motion estimation between an image and a keyframe, warping the image to align with the keyframe and discarding values higher than a threshold on a difference map of said aligned images. Block 710 generates a spatial correspondence function. Control then proceeds from block 710 to block 720 for determining whether the number of motion based correspondences between images is greater than some predetermined threshold value. If not, control proceeds from block 720 to block 730 to update the keyframe. Control then proceeds from block 730 to block 710 to repeat determination of motion based correspondences. If, in block 720, the number of motion based correspondences is greater than the predetermined threshold value, control proceeds to block 730 for performing color correction. Block 730 can be comprised of performing a regression over a set of points in the spatial correspondence function and performing a transformation on the image to minimize color differences between the image and the keyframe. After block 730, each of the tonal stabilized images can be added to an image sequence.

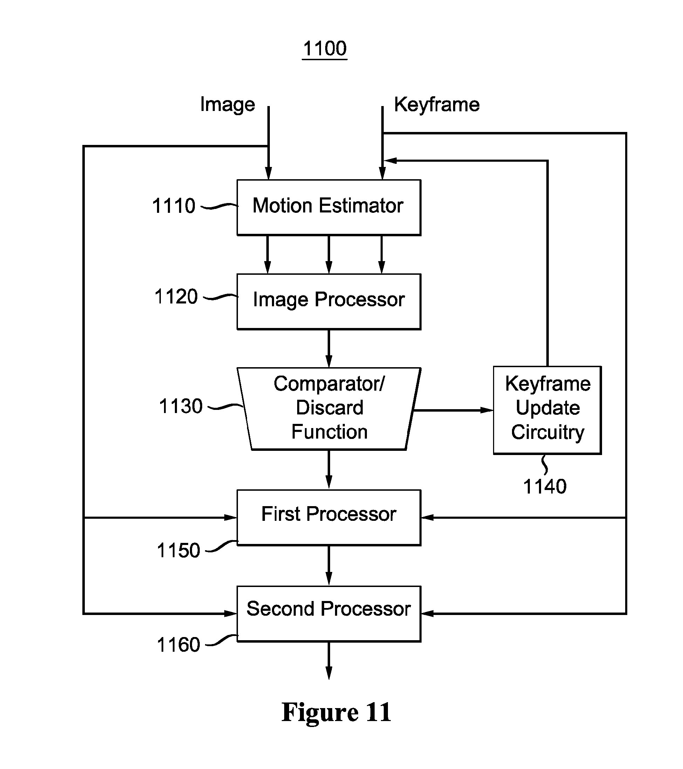

One embodiment of an apparatus 1100 for tonal stabilization of images is shown in Figure 11. The apparatus is comprised of a motion estimator 1110 operating on an image, in signal connectivity with a first input of the motion estimator, and a keyframe, in signal connectivity with a second input of the motion estimator. The first and second outputs of the motion estimator are in signal connectivity with two inputs of image processor 1120. A third output of the motion estimator can provide motion estimation details to image processor 1120. Image processor 1120 aligns the image and the keyframe. An output of image processor 1120 is in signal connectivity with a comparator/discard function circuitry 1130 that operates on a difference map of the aligned image and keyframe and discards values higher than a threshold resulting in a spatial correspondence function. Comparator/discard function circuit 1130 also determines if the number of motion based correspondences between the input image and the keyframe is higher or lower than a predetermined threshold value. If the number of motion based correspondences between the input image and the keyframe is less than a predetermined threshold value, one output from comparator/discard function circuit 1130 is in signal connectivity with an input of keyframe update circuitry 1140 that updates the keyframe and causes control to proceed back to the motion estimator, using the updated keyframe, which is output from keyframe update circuit 1140.

If, however, comparator/discard function 1130 determines that the number of motion based correspondences between the input image and the keyframe is greater than a predetermined threshold value, first processor 1150 receives the output of comparator/discard function 1130, in signal connectivity with its input. First processor 1150 performs a regression over a set of points in the spatial correspondence function and sends its output to the input of second processor 1160. Second processor 1160 performs a transformation of the image to minimize color differences between the image and the keyframe. The tonal stabilized image can then be added back to a sequence of images being stabilized. First processor 1150 and second processor 1160 also receive the image and keyframe as inputs.

The present description illustrates the present principles. It will thus be appreciated that those skilled in the art will be able to devise various arrangements that, although not explicitly described or shown herein, embody the present principles and are thereby included within the present principles.

All examples and conditional language recited herein are intended for pedagogical purposes to aid the reader in understanding the present principles and the concepts contributed by the inventor(s) to furthering the art, and are to be construed as being without limitation to such specifically recited examples and conditions.

Moreover, all statements herein reciting principles, aspects, and embodiments of the present principles, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein represent conceptual views of illustrative circuitry embodying the present principles. Similarly, it will be appreciated that any flow charts, flow diagrams, state transition diagrams, pseudocode, and the like represent various processes which can be substantially represented in computer readable media and so executed by a computer or processor, whether or not such computer or processor is explicitly shown.

The functions of the various elements shown in the figures can be provided through the use of dedicated hardware as well as hardware capable of executing software in association with appropriate software. When provided by a processor, the functions can be provided by a single dedicated processor, by a single shared processor, or by a plurality of individual processors, some of which can be shared. Moreover, explicit use of the term "processor" or "controller" should not be construed to refer exclusively to hardware capable of executing software, and can implicitly include, without limitation, digital signal processor ("DSP") hardware, read-only memory ("ROM") for storing software, random access memory ("RAM"), and non-volatile storage.

Other hardware, conventional and/or custom, can also be included. Similarly, any switches shown in the figures are conceptual only. Their function can be carried out through the operation of program logic, through dedicated logic, through the interaction of program control and dedicated logic, or even manually, the particular technique being selectable by the implementer as more specifically understood from the context.

In the claims hereof, any element expressed as a means for performing a specified function is intended to encompass any way of performing that function including, for example, a) a combination of circuit elements that performs that function or b) software in any form, including, therefore, firmware, microcode or the like, combined with appropriate circuitry for executing that software to perform the function. The present principles as defined by such claims reside in the fact that the functionalities provided by the various recited means are combined and brought together in the manner which the claims call for. It is thus regarded that any means that can provide those functionalities are equivalent to those shown herein.

Reference in the specification to "one embodiment" or "an embodiment" of the present principles, as well as other variations thereof, means that a particular feature, structure, characteristic, and so forth described in connection with the embodiment is included in at least one embodiment of the present principles. Thus, the appearances of the phrase "in one embodiment" or "in an embodiment", as well any other variations, appearing in various places throughout the specification are not necessarily all referring to the same embodiment.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This can be extended, as readily apparent by one of ordinary skill in this and related arts, for as many items listed.

These and other features and advantages of the present principles can be readily ascertained by one of ordinary skill in the pertinent art based on the teachings herein. It is to be understood that the teachings of the present principles can be implemented in various forms of hardware, software, firmware, special purpose processors, or combinations thereof.

Most preferably, the teachings of the present principles are implemented as a combination of hardware and software. Moreover, the software can be implemented as an application program tangibly embodied on a program storage unit. The application program can be uploaded to, and executed by, a machine comprising any suitable architecture. Preferably, the machine is implemented on a computer platform having hardware such as one or more central processing units ("CPU"), a random access memory ("RAM"), and input/output ("I/O") interfaces. The computer platform can also include an operating system and microinstruction code. The various processes and functions described herein can be either part of the microinstruction code or part of the application program, or any combination thereof, which can be executed by a CPU. In addition, various other peripheral units can be connected to the computer platform such as an additional data storage unit and a printing unit.

It is to be further understood that, because some of the constituent system components and methods depicted in the accompanying drawings are preferably implemented in software, the actual connections between the system components or the process function blocks can differ depending upon the manner in which the present principles are programmed. Given the teachings herein, one of ordinary skill in the pertinent art will be able to contemplate these and similar implementations or configurations of the present principles.

Although the illustrative embodiments have been described herein with reference to the accompanying drawings, it is to be understood that the present principles are not limited to those precise embodiments, and that various changes and modifications can be effected therein by one of ordinary skill in the pertinent art without departing from the scope of the present principles. All such changes and modifications are intended to be included within the scope of the present principles as set forth in the appended claims.

**Claims**

1. A method for tonal stabilization of a database of images, comprising:

   determining motion based correspondences between an image and a keyframe to generate a spatial correspondence function;
   updating the keyframe if a number of motion based correspondences between images is less than a threshold before repeating said determining step using said updated keyframe; and
   performing color correction on said image if a number of motion based correspondences is greater than a threshold.

2. The method of Claim 1, wherein said determining comprises:

   performing motion estimation between said image and said keyframe;
   warping said image to align with said keyframe; and
   discarding values higher than a second threshold on a difference map of said aligned images.

3. The method of Claim 2, wherein said performing comprises:

   performing a regression over a set of points in said spatial correspondence function; and
   performing a transformation on said image to minimize color differences between said image and said keyframe.

4. The method of Claim 3, wherein a power law tonal transformation is used.

5. The method of Claim 3, wherein a six-parameters color transformation model is used.

6. An apparatus for tonal stabilization of a database of images, comprising:

   a motion estimator operating on an image and a keyframe;
   an image processor that aligns said image and keyframe;
   a comparator operating on a difference map of said aligned images to discard values higher than a threshold resulting in a spatial correspondence function;
   circuitry that updates said keyframe if a number of motion based correspondences between images is less than a threshold, and causes control to repeat operation of said motion estimator, image processor and comparator;
   a first processor performing a regression over a set of points in said spatial correspondence function if a number of motion based correspondences between images is greater than a threshold; and
   a second processor performing a transformation on said image to minimize color differences between said image and said keyframe.

7. The apparatus of Claim 6, wherein a power law tonal transformation is used.

8. The apparatus of Claim 6, wherein a six-parameters color transformation model is used.

9. A computer program product downloadable from a communication network and/or recorded on a medium readable by computer and/or executable by a processor, comprising program code instructions for implementing a method according to at least one of claims 1 to 5.

10. A non-transitory computer-readable medium comprising a computer program product recorded thereon and capable of being run by a processor, including program code instructions for implementing a method according to at least one of claims 1 to 5.

EP 3 046 318 A1

**Figure 1:** Illustration of video tonal instability. First row, frames from original video. Second row: Same frames from video corrected with the proposed algorithm.

**Figure 2:** Flowchart of proposed motion driven tonal stabilization method

**Figure 3:** Illustration of main steps in proposed motion driven tonal stabilization

Source image

Reference image

Result: Source specified to reference

Histogram specification curves

**Figure 4:** An illustration of channel-wise histogram specification mapping and results. Note that the mapping is irregular with sudden jumps, which results in strong artifacts in the transformed image.

medium exp., sunlight wb

high exp., sunlight wb

low exp., sunlight wb

medium exp., cloudy wb

high exp., cloudy wb

low exp., cloudy wb

**Figure 5:** Pictures taken from the same scene with varying exposure and white balance settings on the camera.

medium exp., sunlight wb

high exp., sunlight wb

low exp., sunlight wb

medium exp., cloudy wb

high exp., cloudy wb

low exp., cloudy wb

**Figure 6:** Pictures shown in Fig. 5 corrected with the power law model, based on the first picture as reference (first column, first row - medium exposure - sunlight white balance).

<u>700</u>

```
        ┌─────────┐
        │  Start  │───── 701
        └─────────┘
             │
             ▼
710 ──  ┌────────────────────────┐
        │   Determine motion     │ ◄───────────────┐
        │ based correspondences  │                 │
        └────────────────────────┘                 │
             │                                      │
             ▼                                      │
        ╱──────────────╲                            │
720 ── ╱    Enough      ╲   No      ┌──────────────┐
       ╲ Correspondences ╲────────► │    Update    │
        ╲──────────────╱            │   keyframe   │
             │                      └──────────────┘
             │ Yes                         │
             ▼                            730
740 ──  ┌────────────────┐
        │  Perform color │
        │   correction   │
        └────────────────┘
             │
             ▼
        ┌────────────────┐
        │   Add frame to │
        │    sequence    │
        └────────────────┘
```

**Figure 7**

**Figure 8A:** Data points extracted from color chart, and estimated power law transformations in linear (left column) and logarithmic (right column) domain.

EP 3 046 318 A1

**Figure 8B:** Data points extracted from color chart, and estimated power law transformations in linear (left column) and logarithmic (right column) domain.

EP 3 046 318 A1

Original $u_t$           Corrected $T_t(u_t)$

t=1

t=25

t=50

t=75

t=100

Original $u_t$           Corrected $T_t(u_t)$

**Figure 9:** An example of exposure correction for a timelapse sequence. Left column: original sequence. Right column, Sequence corrected with power law model.

**Figure 10A:** Data points and estimated curves applied to correct the sequence shown in Figure 9. The estimated curves can be considered as a good approximation of the data distribution.

**Figure 10B:** Data points and estimated curves applied to correct the sequence shown in Figure 9. The estimated curves can be considered as a good approximation of the data distribution.

EP 3 046 318 A1

<u>1100</u>

**Figure 11**

**Figure 12:** Illustration of tonal stabilization in sequence "entrance". **First row:** Frames extracted from the original sequence. **Second row:** stabilizing with $\lambda := 1$ (no temporal weighting) and without tonemap ensures tonal coherence between all the frames, but at the cost of clipping intensities. **Third row:** Tonal stabilization with a temporal tone mapping, where tonal appearance is preserved and clipping do not occurs, however, the sequence is overall darker. **Bottom row:** Tonal stabilization with temporal weighting ( $\lambda$ decreases exponentially in function of motion). While temporal weighting reduces the strict tonal preservation, it may be argued that it produces a visually pleasant result by preserving some degree of the original colors.

**Figure 13:** Flow chart of proposed motion driven tonal stabilization algorithm.

**Europäisches Patentamt**
**European Patent Office**
**Office européen des brevets**

# EUROPEAN SEARCH REPORT

Application Number

EP 15 30 5033

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ALBERT M E ET AL: "Visual rotation detection and estimation for mobile robot navigation", ROBOTICS AND AUTOMATION, 2004. PROCEEDINGS. ICRA '04. 2004 IEEE INTERNATIONAL CONFERENCE ON NEW ORLEANS, LA, USA APRIL 26-MAY 1, 2004, PISCATAWAY, NJ, USA,IEEE, US, vol. 5, 26 April 2004 (2004-04-26), pages 4247-4252, XP010768062, DOI: 10.1109/ROBOT.2004.1302385 ISBN: 978-0-7803-8232-9 * Section III. Matching Landmarks; figure 4 * | 1,9,10 | INV. H04N5/235 H04N5/243 H04N9/73 |
| A | WO 2012/143870 A1 (YISSUM RES DEV CO [IL]; LISCHINSKI DANIEL [IL]; FARBMAN ZEEV [IL]) 26 October 2012 (2012-10-26) * page 5, line 10 - page 11, line 15; figures 1,2 * | 1-10 | |
| A | WANG YINTING ET AL: "Video Tonal Stabilization via Color States Smoothing", IEEE TRANSACTIONS ON IMAGE PROCESSING, IEEE SERVICE CENTER, PISCATAWAY, NJ, US, vol. 23, no. 11, 1 November 2014 (2014-11-01), pages 4838-4849, XP011560272, ISSN: 1057-7149, DOI: 10.1109/TIP.2014.2358880 [retrieved on 2014-09-30] * Sections I- IV; figures 2,3 * | 1-10 | **TECHNICAL FIELDS SEARCHED (IPC)** H04N |

-/--

The present search report has been drawn up for all claims

| Place of search | Date of completion of the search | Examiner |
|---|---|---|
| Munich | 20 August 2015 | Seytter, Fritz |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

**Application Number**

EP 15 30 5033

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Yoav Hacohen ET AL: "Optimizing color consistency in photo collections", ACM Transactions on Graphics (TOG), 21 July 2013 (2013-07-21), pages 1-10, XP055208305, DOI: 10.1145/2461912.2461997 Retrieved from the Internet: URL:http://dl.acm.org/citation.cfm?id=2461997 [retrieved on 2015-08-18] * Sections 1-5 * | 1-10 | |
| A | ROOSMALEN VAN P M B ET AL: "CORRECTION OF INTENSITY FLICKER IN OLD FILM SEQUENCES", IEEE TRANSACTIONS ON CIRCUITS AND SYSTEMS FOR VIDEO TECHNOLOGY, IEEE SERVICE CENTER, PISCATAWAY, NJ, US, vol. 9, no. 7, 1 October 1999 (1999-10-01) , pages 1013-1019, XP000853334, ISSN: 1051-8215, DOI: 10.1109/76.795054 * Sections II.-III.; figures 1-3 * | 1-10 | |
| A | NICOLAS BONNEEL ET AL: "Example-based video color grading", ACM TRANSACTIONS ON GRAPHICS, vol. 32, no. 4, 1 July 2013 (2013-07-01), page 1, XP055162768, ISSN: 0730-0301, DOI: 10.1145/2461912.2461939 * Section 2, 3, 7; figure 3 * | 1-10 | |

-/--

**TECHNICAL FIELDS SEARCHED (IPC)**

The present search report has been drawn up for all claims

| Place of search | Date of completion of the search | Examiner |
|---|---|---|
| Munich | 20 August 2015 | Seytter, Fritz |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 15 30 5033

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | VAZQUEZ-CORRAL JAVIER ET AL: "Color Stabilization Along Time and Across Shots of the Same Scene, for One or Several Cameras of Unknown Specifications", IEEE TRANSACTIONS ON IMAGE PROCESSING, IEEE SERVICE CENTER, PISCATAWAY, NJ, US, vol. 23, no. 10, 1 October 2014 (2014-10-01), pages 4564-4575, XP011559055, ISSN: 1057-7149, DOI: 10.1109/TIP.2014.2344312 [retrieved on 2014-09-12] * Section III. * | 1-10 | |
| A | SIMON CHRISTIAN ET AL: "Video tonal stabilization with automatic multiple anchor frames", THE 18TH IEEE INTERNATIONAL SYMPOSIUM ON CONSUMER ELECTRONICS (ISCE 2014), IEEE, 22 June 2014 (2014-06-22), pages 1-2, XP032631163, DOI: 10.1109/ISCE.2014.6884499 [retrieved on 2014-08-26] * the whole document * | 1-10 | **TECHNICAL FIELDS SEARCHED (IPC)** |

The present search report has been drawn up for all claims

| Place of search | Date of completion of the search | Examiner |
|---|---|---|
| Munich | 20 August 2015 | Seytter, Fritz |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

...................................................................
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 15 30 5033

This annex lists the patent family members relating to the patent documents cited in the above-mentioned European search report.
The members are as contained in the European Patent Office EDP file on
The European Patent Office is in no way liable for these particulars which are merely given for the purpose of information.

20-08-2015

| Patent document cited in search report | | Publication date | Patent family member(s) | | Publication date |
|---|---|---|---|---|---|
| WO 2012143870 | A1 | 26-10-2012 | US 2014300767 | A1 | 09-10-2014 |
| | | | WO 2012143870 | A1 | 26-10-2012 |

EPO FORM P0459

For more details about this annex : see Official Journal of the European Patent Office, No. 12/82